# EUROPEAN PATENT APPLICATION

(11) **EP 1 433 755 A1**
(43) Date of publication of application: **30.06.2004**
(21) Application number: 03258257.9
(22) Date of filing: 31.12.2003
(51) Int. Cl.: C02F 3/00, C02F 3/02, C02F 3/12, C02F 11/02

(54) **Method and Apparatus for the Treatment of Wastewater using Activated Sludge**

(30) Priority: 31.12.2002 GB 0230309
(71) Applicant: WRC PLC, Swindon, Wiltshire SN5 8YF (GB)
(72) Inventor: Hobson, John Andrew, Devizes, Wiltshire SN10 1PS (GB)
(74) Representative: Curtis, Philip Anthony

(57) **Abstract**

A wastewater treatment method and apparatus for enhancing the levels of ammonia removal using a standard activated sludge.

## Description

This invention relates to the treatment of liquids. In particular, this invention relates to increasing the level of nitrification in a wastewater treatment system, in order to reduce the levels of ammonia in a discharged effluent. More specifically, this invention provides a method and apparatus for the treatment of wastewater.

Conventional "activated sludge" processes for liquids, typically wastewater, involve the aeration of the liquid in the presence of a flocculated biomass made up of microorganisms, particularly bacteria. The bacteria oxidise organic matter to carbon dioxide and water, whilst others oxidise ammonia to nitrate. This flocculation, which occurs naturally, is essential as it encourages the biomass to settle in the secondary settlement tank, leaving the treated wastewater almost free of solids. Most of the settled biomass is returned to the aeration tank while a small portion equivalent to the growth of the biomass (the surplus biomass) is wasted and sent for further treatment and/or disposal.

The growth rate of the biomass depends on the rate of feeding untreated wastewater into the tank. The growth rate is often quoted as a feed-to-microorganism (f:m) ratio in g BOD (biochemical oxygen demand) per g MLSS (mixed liquor suspended sludge) per day. The higher the feed rate the greater the f:m ratio and the lower the hydraulic retention time. Characteristic of an activated sludge plant operating under steady state (which can include regular diurnal variations) is a sludge age which is the reciprocal of the daily growth expressed as a fraction of the total mass of biomass in the system. Lowering the f:m ratio increases the sludge age and generally improves the level of treatment.

The organisms responsible for the oxidation of ammonia are known as nitrifiers and also more generally as autotrophs. In an activated sludge plant, these organisms grow more slowly than the heterotrophs, which are responsible for the oxidation of organic matter. At high feedrates - f:m ratios above around 0.2 - the growth rates of autotrophs are less than the sludge age and they fail to establish. As a result there is no appreciable nitrification and levels of ammonia in the treated effluent are similar to those in the feed. As f:m ratios are progressively reduced to 0.1, sludge ages increase and autotrophs become established in the biomass leading to high levels of nitrification. At an f:m ratio of 0.1, typical levels of ammonia in the treated effluent are below 5 mg/l as a 95 percentile, below 1 mg/l as an average.

Environmental standards are continually improving, however. During the last periodic review the regulatory authorities imposed a number of standards of 1 and 2 mg/l ammonia at the 95 percentile level. With the introduction of the EU Water Framework Directive, the reclassification of water sensitivities and the extension of nitrate vulnerable zones, it seems likely that the number of such standards and their stringency will increase. Modelling suggests that even with f:m ratios as low as 0.06, representing a huge increase in cost, current wastewater treatment plants would still fail a standard of 1 mg/l ammonia for a few hours a day during the coldest months of the year.

As f:m ratios are reduced from 0.2 to 0.1, the concentration of autotrophs in the biomass remains fairly constant. This means the total numbers of autotrophs to treat a given mass of ammonia doubles. This explains the improvement in quality. However as f:m ratios are further reduced, by continuing to increase the size of the treatment plant, growth rates of autotrophs start to be limited by lack of ammonia, and the concentration and/or activity of autotrophs in the biomass starts to fall. Consequently, the rate of improvement in effluent ammonia concentrations begins to slow. Therefore, low f:m ratios, with their major cost implications, do not improve effluent quality with respect to ammonia concentration as much as would otherwise be the case.

Prior art activated sludge plants typically comprise an aeration tank into which the effluent is flowed and mixes with the activated sludge to form a mixed liquor, in which a flocculated biomass develops, and a settlement tank, in which the mixed liquor separates into the activated sludge and treated effluent. Whilst it may be possible to use a two-stage system comprising two conventional activated sludge treatment plants in series, the two stages operate in isolation. This completely separates the biomass into two portions pertaining to each of the two stages. This leads to relatively low loadings in the second stage, such that the growth of biomass in the second stage is very low. Accordingly, f:m ratios remain high and very little treatment takes place. Additionally, no or very little nitrification will take place in either the first or second stages, due to the generally high feedrates used. In fact, overall effluent quality from such a system is little or no better than that from a single stage treatment.

It would be desirable to provide an apparatus or method for overcoming or minimising the problems associated with the prior art. In particular, it would be desirable to provide an apparatus or method which enables high levels of nitrification of ammonia in a liquid in addition to high levels of oxidation of organic matter in the liquid.

In broad terms, the present invention provides a method for de-coupling the concentration and/or activity of autotrophs in the biomass from the f:m ratio. The present invention thereby produces better quality effluents for a given size of plant.

According to one aspect of the present invention, there is provided an activated sludge treatment apparatus for the removal of ammonia from a liquid. The apparatus preferably comprises first and second aeration tanks and first and second settlement tanks.

Typically, an aeration tank of activated sludge process contains a mixed liquor comprising raw or settled waste liquid, such as sewerage, and an activated sludge. Typically, a mixed liquor will separate under gravity into a solid-rich portion generally comprising the activated sludge and other solids, and a liquid-rich portion, generally comprising the effluent.

The apparatus preferably comprises a two-stage aeration and separation process, wherein a portion of the activated sludge from a first stage settlement tank is brought forward into a second stage aeration tank.

In effect, the present invention allows for the removal of substantially all the organic matter, particularly in the first stage, and allows for high levels of nitrification, particularly in the second stage.

Preferably, the first aeration tank is in communication with the first settlement tank. Preferably the first settlement tank is in communication with the first aeration tank and the second aeration tank. Preferably the second aeration tank is in fluid communication with the second settlement tank. Preferably the second settlement tank is in fluid communication with the second aeration tank.

In a preferred embodiment, the apparatus comprises an inflow pipe in fluid communication with the first aeration tank, wherein an influent may be flowed through the inflow pipe into the first aeration tank. The influent may be a wastewater, such as sewerage.

The first and second aeration tanks preferably include aeration means, capable of aerating the mixed liquor in the first and second aeration tanks. This is typically achieved by bubbling a gas, typically air, through the mixed liquor.

Typically the mixed liquor separates by gravity in the settlement tanks into a solid-rich portion and a less dense liquid-rich portion. The solid-rich portion will typically comprise the biomass, containing living and dead organisms and other solid debris. The separation step may not be completely effective, such that there may be some suspended solids in the liquid-rich portion. Typically, effective separation can be achieved by utilising a separation tank of sufficient size. The liquid-rich portion will typically comprise the effluent, but may also contain some suspended solids. The term "rich", when used in the terms "solid-rich portion" and "liquid-rich portion", is generally used to denote a majority of one component in each portion. Preferably the solid-rich portion will comprise more than 60% by weight solids (by weight, compared to the weight of liquids). More preferably the solid-rich portion will comprise more than 70% by weight solids. More preferably still, the solid-rich portion will comprise more than 90% by weight solids. Most preferably, the solid-rich portion will comprise 95% by weight solids.

The solid-rich portion may comprise at least 80% of the activated sludge from the mixed liquor. Preferably the solid-rich portion will comprise 90% of the activated sludge from the mixed liquor. More preferably, the solid-rich portion will comprise at least 95% of the activated sludge from the mixed liquor. More preferably still, the solid-rich portion will comprise at least 98% of the activated sludge from the mixed liquor, and most preferably, the solid-rich portion will comprise 99% or 100% of the activated sludge from the mixed liquor.

The liquid-rich portion will preferably comprise at least 80% liquid (by weight, compared to the weight of solids). Typically, the separation tanks will result in a liquid-rich portion comparable, in terms of quantities of solids, with those produced in prior art settlement tanks. Nevertheless, it will be appreciated that the "quality" of separation is variable. Indeed, for reasons more fully discussed below, in one embodiment of the present invention, a relatively low quality first separation stage is desirable, in order to allow biologically active material to pass into the second aeration tank in the liquid-rich portion from the first settlement tank, without the need for a separate flow of the solid-rich portion into the second aeration tank. In this embodiment, sufficient biomass may transferred to the second stage of the treatment to enable the nitrification process to remove significant quantities of ammonia, by virtue of an inefficient first settlement stage.

In another aspect of the present invention, there is provided a liquid treatment apparatus comprising: a first aeration tank having an inflow for a liquid to be treated, and containing a biologically active material for treating the liquid; a first settlement tank in communication with the first aeration tank, such that the liquid and the biologically active material can be flowed from the first aeration tank to the first settlement tank, the first settlement tank serving to separate the liquid and the biologically active material into liquid-rich and solid-rich portions; a second aeration tank containing a biologically active material for treating the liquid, the second aeration tank being in communication with the first separation tank such that said liquid-rich portion can flow from the first separation tank to the second aeration tank; and, a second settlement tank in communication with the second aeration tank, such that the treated liquid and the biologically active material can be flowed from the second aeration tank to the second separation tank, the second settlement tank serving to separate the liquid and the biologically active material into liquid-rich and solid-rich portions, and having an outflow for the liquid-rich portion; wherein said first aeration tank is in communication with said first separation tank, such that at least a portion of said solid-rich portion in said first separation tank can be transferred to said first aeration tank, said second aeration tank is in communication with the first separation tank, such that a portion of said biologically active material in said first settlement tank can be transferred to the second aeration tank either as part of the solid-rich portion from the first separation tank or as a non-separated biologically active material in the liquid-rich portion from the first settlement tank; and wherein said second aeration tank is in communication with the second separation tank, such that at least a portion of said solid-rich portion in the second separation tank can be flowed to the second aeration tank.

The biologically active material is preferably an activated sludge.

In one embodiment, the first and second settlement tanks each comprise a first and a second outlet. The first outlet is preferably positioned on the underside or on a lower portion of the settlement tank, and is adapted to permit the solid-rich portion to flow outwardly from the settlement tank. The second outlet is preferably positioned on the upper portion of the settlement tank, or at an upper periphery of the settlement tanks, and is adapted to permit the liquid-rich portion to flow outwardly from the settlement tank.

Preferably, the first settlement tank first outlet is in communication with the first aeration tank and the second aeration tank, and the first settlement tank second outlet is in communication with the second aeration tank. Preferably, the second settlement tank first outlet provides communication with the second aeration tank, and with a waste solids discharge outlet, and the second settlement tank second outlet is in an effluent outlet for treated wastewater.

In this manner, a liquid to be treated may be permitted to flow from the first aeration tank to the first settlement tank, from said first settlement tank to said second aeration tank, and from said second aeration tank to said second settlement tank. An activated sludge in the first aeration tank may be permitted to flow from the first aeration tank to said first settlement tank, from said first settlement tank to said first and second aeration tanks, from the second aeration tank to the second settlement tank, and from said second settlement tank to said second aeration tank. Thus, a two-stage treatment system is described, wherein at each stage activated sludge is recycled from the settlement tank to the respective aeration tank, and wherein additionally, a portion of said activated sludge is permitted to flow from said first settlement stage to the second aeration stage. A further portion of the activated sludge may be discharged from the second settlement tank.

In one embodiment the first settlement tank first outlet is in fluid communication only with the first aeration tank. In this embodiment, the effluent flowing from the second outlet of the first settlement tank may contain sufficiently high quantities of biomass such that is unnecessary to flow the solid-rich portion from the first outflow to the second aeration tank. This may be achieved by making the first settlement tank sufficiently small in volume that settlement is only partially effective, whereby surplus biomass from the first settlement tank may pass to the second aeration tank via the first settlement tank second outlet, i.e. the surplus biomass may be communicated to the second aeration tank as liquid effluent from the first settlement tank. In effect, this results in the fluid effluent from the first settlement tank being relatively low quality. The average solids concentration in the first settlement tank liquid effluent may be as high as around 150 mg/l. The peak daily solids flow may be significantly higher than this. This has the added effect of lowering the amount of solids permitted to flow from the first settlement tank to the second aeration tank. In some circumstances, an additional solid-rich flow is desirable in addition. The solid-rich flow may then be increased as necessary, for instance if the liquid-rich portion does not contain sufficient quantities of biomass. This enables the apparatus of the present invention to be a straightforward modification of an existing wastewater treatment system, as the first settlement tank can be formed from the existing aeration tank. Alternatively, the first settlement tank can form an additional component of the existing system, whereby the overall volume of the aeration tank remains unchanged.

In one embodiment the first settlement tank is smaller in volume than the second settlement tank.

In one embodiment, the separation in the first settlement tank is preferably only partially effective at separating the biologically active material and any other solids from the liquid. The liquid-rich portion may comprise an average of up to 175 mg/l solids concentration. Preferably the liquid portion comprises an average of up to 150mg/l solids. More preferably the liquid portion comprises 25-150mg/l solids. More preferably still the liquid portion comprises 50-125 mg/l solids. Most preferably the liquid portion comprises 75-100mg/l solids.

When any activated sludge system operates successfully, the mass of biomass grows, as the organisms grow and multiply. In order to maintain a relatively constant level of biomass in the system, a quantity of biomass equivalent to the newly grown biomass in the first aeration stage - the "surplus solids" - must be removed from the system. In the present invention, the quantity of solids permitted to flow from said first settlement stage to the second aeration stage may be approximately equivalent to the quantity of surplus solids in the first settlement stage. Accordingly, it is preferable to maintain a rate of transfer of solids from the first settlement stage to the second aeration stage that is broadly equivalent to the rate of increase in mass of the activated sludge in the first aeration stage. The solids that remain in the first settlement stage are preferably recycled to the first aeration stage. The surplus solids from the second aeration stage may be discharged as waste from the second settlement tank. Preferably the remainder of the solid-rich portion is recycled to the second aeration stage.

In one embodiment, the apparatus further comprises means to monitor the movement of solids discharged from the first and second settlement tanks. The apparatus may also comprise means to control the overall flow of the solid-rich portion and liquid-rich portion through the apparatus. Preferably the apparatus comprises means to control the transfer of the biologically active material from the first settlement stage to the second aeration stage. The control means may control the rate of flow of the solid-rich portion from the first settlement tank to the second aeration tank, or the control means may monitor and control the level of biologically active material-containing solid-rich portion present in the liquid-rich portion of the first settlement tank. The flow of materials through the apparatus of the present invention may occur continuously, or the control means may permit flow of materials, at any point, in a discontinuous manner. For example it may be desirable to maintain a continuous flow of liquid through the apparatus, and to control flow of the biologically active material in a discontinuous manner, for instance, by passing quantities of the solid-rich portion forward from the first settlement stage to the second aeration stage only at certain specific times, such as when the mass of solid in the first stage increases, or when the ammonia content in the effluent increases.

The system of the present invention enables, by a simple modification to an existing system, the link between the concentration of nitrifying organisms, other autotrophs and slow growing organisms in the biomass to the f:m ratio to be broken or substantially removed, such that the levels of ammonia in the final effluent are reduced to a consistently lower level than would result from a conventional system. The presently claimed apparatus and method are also believed to lead to enhanced removal of refractory organic compounds, such as endocrine disruptors.

In another aspect of the present invention, there is provided a method of treating a liquid, comprising the steps of: aerating the liquid in combination with a biologically active material in a first aeration stage; at least partially separating the aerated liquid and the biologically active material, from the first aeration stage, into liquid-rich and solid-rich portions in a first separation stage; aerating the liquid-rich portion in combination with a biologically active material in a second aeration stage; separating the aerated liquid and the biologically active material, from the second aeration stage, into liquid-rich and solid-rich portions in a second separation stage; recovering the liquid-rich portion from the second separation stage; transferring a portion of said biologically active material from said first settlement stage to the second aeration stage either as part of the solid-rich portion from the first settlement stage or as non-separated biologically active material in the liquid-rich portion from the first settlement stage; combining said portion of said biologically active material with the liquid being treated in the second aeration stage; feeding at least a portion of said solid-rich portion from said first separation stage to the liquid being treated in the first aeration stage; and, feeding at least some of the solid-rich portion from the second settlement stage to the liquid being treated in the second aeration stage.

A quantity of the solid-rich portion in the first settlement tank may be discharged from the first settlement tank to the second aeration tank. Preferably this quantity is equivalent to the surplus solids produced in the first aeration stage. Additionally, preferably the remainder of the solids in the first settlement tank, or a majority thereof, are recycled from the first settlement tank to the first aeration tank.

A quantity of the solid-rich portion in the second settlement tank may be discharged as waste from the second settlement tank. Preferably this quantity is equivalent to the quantity of surplus solids produced in the second aeration tank. Preferably the liquid-rich portion in the second settlement stage is discharged as treated effluent from the second settlement stage. Preferably a majority of the solids portion in the second settlement stage is recycled from the second settlement tank to the second aeration tank. The surplus solids are those solids produced as the biomass grows in the aeration tank.

The method may further comprise the step of controlling the flow of solids from the second settlement tank to the second aeration tank, such that the quantity of solids discharged from the second settlement tank as waste is less than or approximately equal to the efflux of solids from the second aeration tank.

In one embodiment, biologically active material is passed forward from the first separation stage to the second aeration stage in both the liquid-rich portion and the solid-rich portion from the first separation stage.

In another aspect of the present invention, there is provided a two-stage waste liquid treatment method for removing organic matter and ammonia from said waste liquid, the method comprising the steps of: flowing said waste liquid into a first aeration tank containing an activated sludge to create a first mixed liquor containing a solid-rich portion and a liquid-rich portion; flowing said first mixed liquor from said first aeration tank into a first settlement tank, said first settlement tank serving to at least partially separate said first mixed liquor into said solid-rich portion and a liquid-rich portion; flowing said liquid-rich portion, from said first settlement tank into a second aeration tank containing an activated sludge to create a second mixed liquor; flowing said second mixed liquor from said second aeration tank into a second settlement tank, said second settlement tank serving to separate said second mixed liquor into a solid-rich portion and a liquid-rich portion; flowing a portion of said solid-rich portion from said first settlement tank into said first and second aeration tanks; and flowing a portion of said solid-rich from said second settlement tank into said second aeration tank.

In one embodiment, the first aeration tank is in fluid communication with the first settlement tank, such that the aerated first mixed liquor may be flowed from the first aeration tank into the first settlement tank. In the first settlement tank, the solids portion of the first mixed liquor may be permitted to at least partially gravitate to a lower portion of the settlement tank, and the liquid portion will generally remain in an upper portion of the settlement tank. The solid-rich portion is at least partially removed from the first settlement tank. A portion of the solid-rich portion is recycled from the first settlement tank to the first aeration tank, and a portion of the solid-rich portion is flowed from the first settlement tank into the second aeration tank. Additionally, preferably the liquid-rich portion of the first mixed liquor in the first settlement tank is permitted to flow from the first settlement tank into the second aeration tank. Preferably the second aeration tank is in fluid communication with the second settlement tank, such that the aerated second mixed liquor may be flowed from the second aeration tank into the second settlement tank. In the second settlement tank, the mixed liquor is preferably permitted to settle gravitationally into a solid-rich portion in a lower portion of the second settlement tank and a liquid-rich portion in an upper portion of the second settlement tank. Preferably at least a portion of the solid-rich portion is recycled to the second aeration tank, and a portion of the solids portion is discharged as surplus solids. Preferably the liquid-rich portion is discharged as a treated effluent from the second settlement tank.

In another aspect of the invention, there is provided a method of substantially breaking the link in a wastewater treatment plant between the concentration of nitrifying organisms, other autotrophs and slow growing organisms in the biomass, and the organic loading on the biomass as represented by the f:m ratio, leading to enhanced removals of ammonia and refractory organic compounds such as those represented by the class known as endocrine disruptors.

In this method, the aeration tank of an activated sludge tank may be divided into two or more compartments. Intermediate settlement tanks may be placed between the newly divided compartments.

Preferably the bulk of the settled solids in any of the settlement tanks is recycled to the preceding aeration compartment.

Preferably the surplus biomass from any compartment, save the last, is fed forwards to the subsequent compartment. This raises the concentration of nitrifying organisms and other autotrophs from a value typical of the lower f:m ratios of subsequent compartments towards that typical of the higher f:m ratio of preceding compartments. Preferably a portion of the surplus biomass from the final settlement tank is fed back to an earlier compartment.

In one embodiment the intermediate settlement tanks are deliberately designed, by making them much smaller than typical, to produce a poor quality effluent such that the flux of suspended solids in the effluent from the intermediate settlement tanks is of the same order as the surplus solids from the preceding aeration stage.

Preferably the method further comprises the step of controlling the process so that when the flux of solids from any settlement tank is greater than the flux of surplus solids from the preceding aeration tank , the shortfall of solids in the preceding tank can be compensated for by using a portion of the surplus solids from the final settlement tank.

The intermediate settlement tank may be fashioned from within the aeration tank of an unmodified apparatus of the prior art.

Reference is now made to the accompanying figures, in which:
Figure 1A shows a conventional prior art activated sludge plant; and
Figure 1B shows an activated sludge plant according to an embodiment of the present invention.
Figure 2 illustrates the performance of a plant modified according to the current invention together with that of an equivalently sized conventional plant.

Activated sludges are well known in the art, and any convention activated sludge may be employed in the present invention. In general an activated sludge comprises a bacteria-laden sludge or flocculated biomass, containing, in particular, zoological bacteria, and capable of aiding the treatment of waste liquids, such as sewerage. Mixed liquors are also well known in the art, and generally comprise a mixture of an activated sludge and the liquid being treated, either in a raw or treated state. A mixed liquor will typically separate under gravity into a substantially solid activated sludge and a liquid component.

With reference to figure 1A, typical activated sludge plants of the prior art comprise a wastewater feed or inflow (1), which permits wastewater to enter an aeration tank (2). In the aeration tank (2), air is bubbled through the wastewater in order to enhance the growth of a flocculated biomass, which is important for the effective treatment of the wastewater. The flocculated biomass is also known as an activated sludge.

The aeration tank (2) is connected to a settlement tank (3), such that mixed liquor (i.e. wastewater and activated sludge) is flowed from the aeration tank (2) to the settlement tank (3). Any activated sludge plant (with efficient settlement) produces surplus solids as the biomass grows, which need to be 'wasted' (i.e. removed from the system). In the settlement tank (3), the mixed liquor separates under the force of gravity into a liquid portion, containing none or a small quantity of suspended solids, and a solids portion containing all, or the majority of the activated sludge. The activated sludge-containing solids portion is discharged from the settlement tank (2), whilst the liquids portion is removed as treated effluent. A portion of the activated sludge-containing solids portion is removed from the settlement tank (3) for recycling to the aeration tank (2), in order to maintain a level of organisms in the aeration tank (2), whilst the surplus activated sludge-containing solids portion is discharged as waste. As discussed above, in conventional systems, the quality of the effluent discharged from such a plant can be low, particularly in terms of ammonia content, which may be high even when the f:m ratio is low.

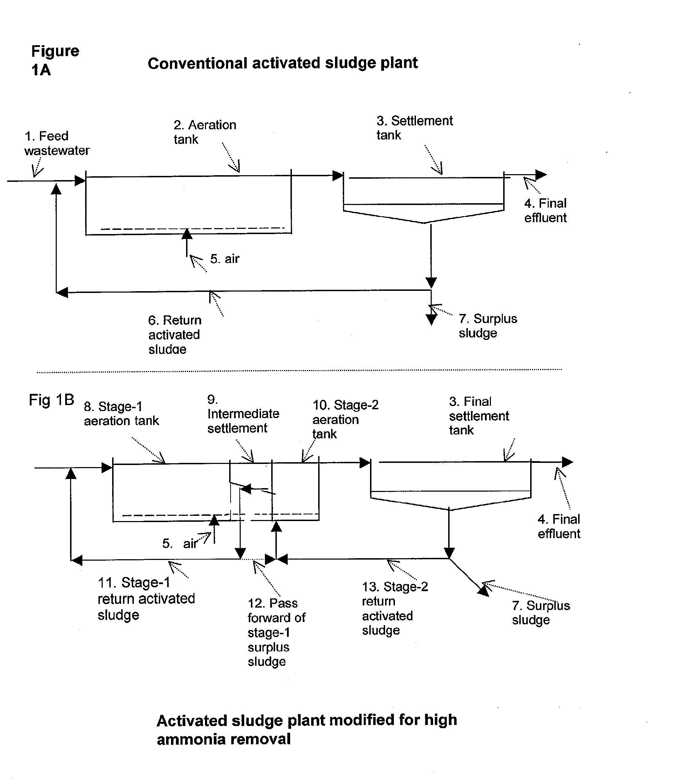

With reference now to figure 1B, the aeration tank (2) of a conventional single stage activated sludge plant is shown split into two. This split can be typically in the ratio 2:1 - 1^{st}-stage:2^{nd}-stage. Mixed liquor is allowed to flow from the 1^{st}-stage (8) to the 2^{nd}-stage (10) via an additional intermediate settlement zone (9). This is described in more detail below. Activated sludge/solids from the new, intermediate or first settlement zone (11) are recycled to the head of the 1^{st}-stage. Activated sludge/solids from the original secondary settlement tank (13) are recycled to the head of a 2^{nd}-stage aeration tank (10).

In this system, as the aeration tank (2) is initially divided in two, the f:m ratio, and the related ammonia loading, on the 1^{st} stage rises over a conventional activated sludge plant. There is a small reduction in removal of organic matter and a slightly greater reduction in removal of ammonia. Again, provided the original f:m ratio was below around 0.15 however, the f:m ratio on the 1^{st}-stage will be below 0.23 and removal of ammonia will still be substantial, leaving residuals of a few mg/l. The volumetric loadings on the 2^{nd}-stage, both of BOD and ammonia, will be extremely low. However, as described above, this does not translate directly to a low f:m ratio. The loadings are now so low that growth of biomass in the second stage is also extremely low. In fact, the second stage does not develop significant concentrations of biomass, f:m ratios remain high and very little treatment takes place. Overall effluent quality from the split process is no more effective than from a conventional configuration.

It has been found, however, that the situation dramatically improves if, according to the present invention, the surplus biomass from the 1^{st}-stage is passed forward along the line of the dashed arrow (12) to the 2^{nd}-stage. In this manner it becomes possible to control the level of biomass in the 2^{nd}-stage as normal by controlling the amount of solids wasted as discharge from the second settlement tank (3) along the line of arrow (7). Furthermore, the activity of autotrophs in the sludge passed forward is very high. Though there will be decay of this activity, it will remain more than enough to deal with the very low loads applied to the 2^{nd}-stage.

Using generally accepted process models it can be seen that applying the new configuration to a completely mixed activated sludge plant, over a wide range of f:m ratios, the ammonia concentration in the final effluent is reduced to about one third of that from the equivalent conventional configuration. Modem activated sludge plants employ the more efficient plug-flow configuration. Modelling showed that use of the new configuration for a plug-flow plant receiving a diurnally varying load, reduced the diurnal peak ammonia concentration in the final effluent by a factor of 4 compared to the conventional configuration.

The new configuration of the present invention does not require any increase in the size of the aeration tank. A new intermediate settlement tank (9) is required, but the cost of a new intermediate settlement will be much less than the cost of extra aeration tank otherwise needed to move to a low ammonia standard. Energy costs in conventional activated sludge plant are governed by the oxygen transfer requirement. Reducing f:m ratios increases the oxygen requirement as more biomass is oxidised. In addition as f:m ratios are lowered below 0.1 the energy required for mixing can begin to dominate and energy requirements may start to rise even faster. The new configuration can therefore lead to savings in both capital and operating cost whenever a very high quality effluent is required.

As described so far the intermediate settlement could be performed in conventionally sized settlement tank or tanks. This would produce a relatively high quality interstage effluent flowing from the intermediate settlement tank (9) to the second aeration tank (10). In effect the quality of this interstage effluent is immediately reduced by the addition of the surplus solids fed forward from the 1^{st}-stage to the second aeration tank.

However, a modification of conventional systems is possible, in a manner as illustrated in Figure 1B, which can reduce further the cost of transferring to the new configuration. It has been found to be acceptable for the average solids concentration overflowing the intermediate settlement stage to be as high as around 150 mg/l. In this embodiment, the liquid flowing from the intermediate settlement tank is purposely relatively low quality, such that no additional solids wastage from the 1^{st}-stage is then required. In fact, the peak daily solids concentration in the interstage flow can be significantly higher than this. Very little experience exists in deliberately designing settlement tanks for such poor quality effluents. There is no doubt however that such tanks could be significantly smaller than those required to produce a very high quality of final effluent. This will significantly reduce the cost of making the proposed modification.

Figures 1A and 1B illustrate that it may be possible to fashion the intermediate settlement tank (9) from the existing aeration tank (2). This will reduce the size of the aeration tank (2) but it is likely the improvement in performance will more than compensate for this. This actually depends on the size necessary for a relatively poorly performing settlement tank. Alternatively the intermediate settlement tank (9) can be an additional item, leaving the volume of the aeration tank unchanged.

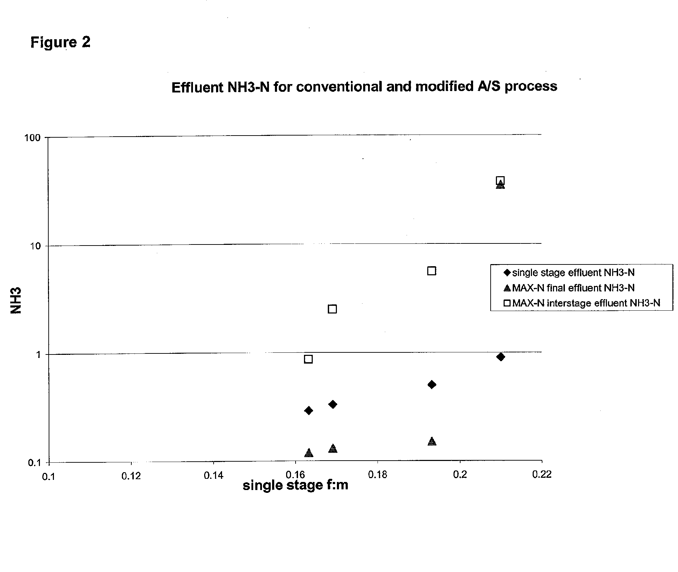

Figure 2 is based on the output of standard process models. The middle set of points represents the average level of ammonia in the final effluent of a conventional plug-flow activated sludge plant. This level rises as the f:m ratio rises. The upper set of points represents the levels of ammonia of the interstage flow of a plant modified according to the current invention. Ammonia levels are significantly higher than the level in the final effluent from the single stage plant. This reflects that the f:m ratio on this 1^{st} stage is around 50% greater than that for the equivalent single stage plant. When the single stage f:m rises to 0.2, the 1^{st}-stage loading of the modified system rises to 0.3 when wash-out of the autotrophs occurs and the ammonia level in the interstage flow rises to that in the feed - no nitrification occurs.

The lower set of points in Figure 2 represents the levels of ammonia in the final effluent of the modified plant. This is at all times considerably lower than the equivalent levels in the conventional system except at the highest loading show. At this higher loading, not only is there no nitrification in the 1^{st}-stage but there are no autotrophs in the surplus biomass fed forward to the second stage so little nitrification occurs there either. The levels of ammonia are similar to those in the feed, very much worse than the equivalent value in the conventional single stage plant. As f:m ratios continue to rise towards 0.3, the conventional plant would show a similar dramatic drop in performance.

Whenever substantial nitrification is required the f:m ratio needed in the conventional process will be within the range where the modification described in the current invention brings about major improvements in effluent quality.

It is also noted that the level of removal of many refractory organic compounds of which endocrine disruptors are an important class, closely follow levels of removal of ammonia in wastewater treatment plants. The modifications described herein improve the removal of this important class of compounds.

It will be appreciated that the invention can be modified. For example, the apparatus may comprise a plurality of intermediate treatment stages. As hereinbefore described, the apparatus typically comprises first and second stages, each stage comprising an aeration tank and a settlement tank. Nevertheless, it will be appreciated that the principles of the invention will continue to apply where the apparatus comprises further stages of aeration and settlement tanks preceding the final settlement tank.

## Claims

1. Liquid treatment apparatus comprising: a first aeration tank having an inflow for a liquid to be treated, and containing a biologically active material for treating the liquid; a first settlement tank in communication with the first aeration tank, such that the liquid and the biologically active material can be flowed from the first aeration tank to the first settlement tank, the first settlement tank serving to separate the liquid and the biologically active material into liquid-rich and solid-rich portions; a second aeration tank containing a biologically active material for treating the liquid, the second aeration tank being in communication with the first separation tank such that said liquid-rich portion can flow from the first separation tank to the second aeration tank; and, a second settlement tank in communication with the second aeration tank, such that the treated liquid and the biologically active material can be flowed from the second aeration tank to the second separation tank, the second settlement tank serving to separate the liquid and the biologically active material into liquid-rich and solid-rich portions, and having an outflow for the liquid-rich portion; wherein said first aeration tank is in communication with said first separation tank, such that at least a portion of said solid-rich portion in said first separation tank can be transferred to said first aeration tank, said second aeration tank is in communication with said first separation tank, such that a portion of said biologically active material in said first settlement tank can be transferred to the second aeration tank, either as part of the solid-rich portion from the first separation tank or as a non-separated biologically active material in the liquid-rich portion from the first settlement tank; and wherein said second aeration tank is in communication with the second separation tank, such that at least a portion of said solid-rich portion in the second separation tank can be flowed to the second aeration tank.

2. An apparatus according to claim 1, further comprising means to control a rate of transfer of said biologically active material from said first settlement tank to said second aeration tank.

3. An apparatus according to claim 1 or 2, wherein said second settlement tank further comprises an outflow for said solid-rich portion, and the apparatus further comprises means to control the flow of the solid-rich portion from said second settlement tank through said outflow.

4. An apparatus according to claim 1, 2 or 3, further comprising means to control the flow of the solid-rich portion between the first settlement tank and the first aeration tank, and between the second settlement tank and the second aeration tank.

5. An apparatus according to claim 1, 2, 3 or 4, wherein the biologically active material is transferred from the first settlement tank to the second aeration tank as part of the solids-rich portion from the first settlement tank.

6. An apparatus according to claim 1, 2, 3 or 4, wherein the biologically active material is transferred from the first settlement tank to the second aeration tank as non-separated solids in the liquid-rich portion.

7. An apparatus according to any preceding claim, wherein the first settlement tank is smaller in size than the second settlement tank.

8. An apparatus according to any preceding claim, wherein the biologically active material is an activated sludge, and the liquid is a wastewater, optionally sewerage.

9. A method of treating a liquid, comprising the steps of: aerating the liquid in combination with a biologically active material in a first aeration stage; at least partially separating the aerated liquid and the biologically active material, from the first aeration stage, into liquid-rich and solid-rich portions in a first separation stage; aerating the liquid-rich portion in combination with a biologically active material in a second aeration stage; separating the aerated liquid and the biologically active material, from the second aeration stage, into liquid-rich and solid-rich portions in a second separation stage; recovering the liquid-rich portion from the second separation stage; transferring a portion of said biologically active material from said first separation stage to the second aeration stage either as part of the solid-rich portion from the first separation stage or as non-separated biologically active material in the liquid-rich portion from the first separation stage; combining said portion of said biologically active material with the liquid being treated in the second aeration stage; feeding at least a portion of said solid-rich portion from said first separation stage to the liquid being treated in the first aeration stage; and, feeding at least some of the solid-rich portion from the second separation stage to the liquid being treated in the second aeration stage.

10. A method according to claim 9, wherein said biologically active material is transferred from said first separation stage to said second aeration stage as part of the solid-rich portion from the first separation stage.

11. A method according to claim 9 or 10, wherein said biologically active material is transferred from said first separation stage to said second aeration stage non-separated biologically active material in the liquid-rich portion from the first separation stage.

12. A method according to claim 9, 10 or 11, wherein a portion of the solid-rich portion from the second separation stage is discharged from the second separation stage.

13. A method according to claim 12, wherein the rate at which the solid-rich portion is discharged from the second separation stage is approximately equivalent to the rate of growth of biologically activated material in the second aeration stage.

14. A method according to any one of claims 9 to 13, wherein the rate of transfer of biologically active material from the first separation stage to the second aeration stage is approximately equivalent to the rate of growth of biologically activated material in the first aeration stage.
